# EUROPÄISCHE PATENTSCHRIFT

(11) **EP 2 881 307 B1**
(45) Veröffentlichungstag und Bekanntmachung des Hinweises auf die Patenterteilung: **18.04.2018**
(21) Anmeldenummer: 14004104.7
(22) Anmeldetag: 04.12.2014
(51) Int. Cl.: B62D 21/11, B60K 17/00, B60K 17/344, B62D 21/03, B62D 21/07, B62D 27/02, B62D 29/00

(54) **Hilfsrahmenanordnung für ein Fahrzeug**
Sub-frame for a vehicle
Agencement de faux-châssis pour un véhicule

(30) Priorität: 09.12.2013 DE 102013020565
(43) Veröffentlichungstag der Anmeldung: 10.06.2015
(73) Patentinhaber: AUDI AG, 85045 Ingolstadt (DE)
(72) Erfinder: Leibl, Peter, DE - 85077 Manching (DE)
(74) Vertreter: Reichert, Thomas Klaus

(56) Entgegenhaltungen:
- EP-A1- 2 578 473
- WO-A1-2013/110528
- DE-A1- 19 922 800
- DE-A1-102008 057 196

## Beschreibung

Die vorliegende Erfindung betrifft eine Hilfsrahmenanordnung für ein Fahrzeug, umfassend einen mehrteilig aufgebauten Hilfsrahmen mit zwei voneinander beabstandeten Längsträgern, die von zwei voneinander beabstandeten Querträgern rahmenartig verbunden sind, sowie ein von den Längsträgern und Querträgern umrahmt an dem Hilfsrahmen gelagertes Verteilergetriebe mit einer Eingangswelle und zwei Ausgangswellen, wobei ein erster der Querträger von einem Teil des Verteilergetriebes in einem Kreuzungsabschnitt gequert wird und aus zwei zumindest abschnittsweise miteinander verbundenen Schalenteilen aufgebaut ist, sowie ein Fahrzeug mit einer solchen Hilfsrahmenanordnung.

Derartige Hilfsrahmenanordnungen werden bei Fahrzeugen mit angetriebener Hinterachse verwendet. Den Hilfsrahmen (auch Achsträger genannt) bildet eine Rahmenkonstruktion aus zwei parallel voneinander beabstandeten Längsträgern, die von zwei ebenfalls parallel voneinander beabstandeten Querträgern verbunden werden. In dem freien Raum zwischen den Längs- und Querträgern wird ein Verteilergetriebe, auch als Zwischengetriebe, Ausgleichsgetriebe oder Differentialgetriebe (kurz: Differential) bekannt, angeordnet. In das Verteilergetriebe führt eine von einer Antriebsquelle kommende Eingangswelle hinein, deren Drehmoment auf zwei seitlich aus dem Verteilergetriebe austretenden Ausgangswellen verteilt wird. Der Hilfsrahmen weist Anbindungsstellen für radführende Lenker auf, wobei die Lenker einerseits mit dem Hilfsrahmen und andererseits mit einem das Rad aufnehmenden Radträger verbunden sind. Die Hilfsrahmenanordnung kann als Ganzes mit der Fahrzeug-Karosserie verbunden werden, wobei der Hilfsrahmen mit mehreren, vorzugsweise vier Lagern, elastisch an der Fahrzeug-Karosserie befestigt wird. Als Hilfsrahmenanordnung soll im Kontext dieser Offenbarung eine Baugruppe aus Hilfsrahmen und Verteilergetriebe verstanden werden. In der Praxis dürften dieser Baugruppe noch die radführenden Bauteile wie Lenker, Radträger oder Bremsanlage hinzugefügt werden, jedoch spielen diese für die vorliegende Erfindung keine Rolle und bleiben daher weitestgehend unerwähnt.

Die EP 2 093 131 A2 offenbart eine Hilfsrahmenanordnung für ein Fahrzeug, umfassend einen Hilfsrahmen mit zwei voneinander beabstandeten Längsträgern, die von zwei voneinander beabstandeten Querträgern rahmenartig verbunden sind, sowie ein von den Längsträgern und Querträgern umrahmt an dem Hilfsrahmen gelagertes Verteilergetriebe mit einer Eingangswelle und zwei Ausgangswellen, wobei ein erster der Querträger von einem Teil des Verteilergetriebes in einem Kreuzungsabschnitt gequert wird. Der Hilfsrahmen ist als einteilige Gusskonstruktion ausgeführt und der erste Querträger unterquert den Teil des Verteilergetriebes mit einem geschwungenen Verlauf im Kreuzungsabschnitt. Der erste Querträger weist zwei Laschen auf, die zusammen eine Lageraufnahme für ein Lagerelement des Verteilergetriebes ausbilden, wobei das Lagerelement achsparallel zur Eingangswelle in Richtung des ersten Querträgers verschoben von dem Verteilergetriebe abragt. Die Nachteile einer einteiligen Gusskonstruktion des Hilfsrahmens liegen darin, dass dieser mit seinen angeformten Laschen sehr aufwändig zu fertigen ist und bauartbedingt auch vergleichsweise viel Gewicht aufweist. Zudem erfolgt die Krafteinleitung in die Lageraufnahme konstruktionsbedingt an dem Abschnitt des Querträgers mit dem geringsten Querschnitt.

Die EP 1 035 003 A2 beschreibt eine Hilfsrahmenanordnung für ein Fahrzeug, umfassend einen Hilfsrahmen mit zwei voneinander beabstandeten Längsträgern, die von zwei voneinander beabstandeten Querträgern rahmenartig verbunden sind, sowie ein von den Längsträgern und Querträgern umrahmt an dem Hilfsrahmen gelagertes Verteilergetriebe mit einer Eingangswelle und zwei Ausgangswellen, wobei ein erster der Querträger von einem Teil des Verteilergetriebes in einem Kreuzungsabschnitt gequert wird. Der Hilfsrahmen ist als mehrteilige Schweißkonstruktion ausgeführt und der aus zwei miteinander gefügten Schalenteilen gebildete erste Querträger unterquert den Teil des Verteilergetriebes mit einem geschwungenen Verlauf im Kreuzungsabschnitt. Dem ersten Querträger werden zwei Laschen angefügt, die zusammen eine in Richtung eines zweiten der Querträger weisende Lageraufnahme für ein Lagerelement des Verteilergetriebes ausbilden, wobei das Lagerelement achsparallel zur Eingangswelle in Richtung des ersten Querträgers verschoben von dem Verteilergetriebe abragt. Diese außermittig des Querträgers ausgebildete Lageraufnahme hat den Nachteil, dass die Krafteinleitung durch das Verteilergetriebe den Querträger auf Torsion und Biegung beansprucht. Zudem verläuft der Lastpfad über die Fügestelle der beiden Schalenteile hinweg.

Die WO 2013/110528 A1 und die DE102008057196 zeigen eine Hilfsrahmenanordnung für ein Fahrzeug, umfassend einen Hilfsrahmen mit zwei voneinander beabstandeten Längsträgern, die von zwei voneinander beabstandeten Querträgern rahmenartig verbunden sind, sowie geeignet ist ein von den Längsträgern und Querträgern umrahmt an dem Hilfsrahmen lagerbares Verteilergetriebe mit einer Eingangswelle und zwei Ausgangswellen aufzunehmen, wobei ein erster der Querträger von einem Teil des Verteilergetriebes in einem Kreuzungsabschnitt gequert werden kann. Der Hilfsrahmen ist als mehrteilige Schweißkonstruktion ausgeführt und der erste Querträger würde den Teil des Verteilergetriebes mit einem geschwungenen Verlauf im Kreuzungsabschnitt überqueren. Der erste Querträger ist aus zwei Schalenteilen mit jeweils zwei Laschen aufgebaut, die zusammen zwei Lageraufnahmen für zwei entsprechende Lagerelemente des Verteilergetriebes ausbilden, wobei die Lagerelemente jeweils achsparallel zur Eingangswelle in Richtung eines der Querträger verschoben von dem Verteilergetriebe abragen. Die zwei Lageraufnahmen am ersten Querträger benötigen indes vergleichsweise viel Bauraum.

Aufgabe der vorliegenden Erfindung ist es daher eine Hilfsrahmenanordnung für ein Fahrzeug mit einem Hilfsrahmen in mehrteiliger Bauweise bereitzustellen, die kompakt baut und dennoch eine gute Krafteinleitung vom Lagerelement des Verteilergetriebes in den entsprechenden Querträger aufweist.

Diese Aufgabe wird durch die Merkmale des Patentanspruchs 1 gelöst.

Ein Fahrzeug mit einer erfindungsgemäßen Hilfsrahmenanordnung ist in Patentanspruch 10 beansprucht.

Eine Hilfsrahmenanordnung für ein Fahrzeug umfasst einen mehrteilig aufgebauten Hilfsrahmen mit zwei voneinander beabstandeten Längsträgern, die von zwei voneinander beabstandeten Querträgern rahmenartig verbunden sind, sowie ein von den Längsträgern und Querträgern umrahmt an dem Hilfsrahmen gelagertes Verteilergetriebe mit einer Eingangswelle und zwei Ausgangswellen, wobei ein erster der Querträger von einem Teil des Verteilergetriebes in einem Kreuzungsabschnitt gequert wird und aus zwei abschnittsweise miteinander verbundenen Schalenteilen aufgebaut ist, wobei jedes der beiden Schalenteile eine Lasche ausbildet und die Laschen zusammen eine Lageraufnahme eines Lagerelements des Verteilergetriebes ausbilden und wobei das Lagerelement achsparallel zur Eingangswelle in Richtung eines der Längsträger verschoben von dem Verteilergetriebe abragt.

Indem der von einem Teil des Verteilergetriebes in einem Kreuzungsabschnitt gequerte erste Querträger aus zwei miteinander zumindest abschnittsweise gefügten Schalenteilen aufgebaut ist, wobei jedes der beiden Schalenteile eine Lasche ausformt, die zusammen eine Lageraufnahme für ein Lagerelement des Verteilergetriebes bilden und wobei das Lagerelement achsparallel zur Eingangswelle in Richtung eines der Längsträger verschoben, in anderen Worten ausgedrückt in etwa seitlich, von dem Verteilergetriebe abragt, kann die aus einer Relativbewegung des Verteilergetriebes resultierende Kraft über das Lagerelement besonders günstig in den ersten Querträger eingeleitet werden. Entlang des Lastpfades von der Lageraufnahme zu den Längsträgern befinden sich keine Fügestellen, insbesondere keine Schweißnähte. Bevorzugt verläuft die Fügenaht in Fahrzeughochrichtung betrachtet auf der Oberseite des Querträgers entlang und in Fahrzeugquerrichtung betrachtet zwischen den beiden Laschen hindurch. Die beiden Schalenteile überlappen sich auf der Fügelinie bereichsweise. Indem das Lagerelement seitlich von dem Verteilergetriebe abragt, kann die entsprechende Lageraufnahme am Querträger ohne nennenswerte Schwächung des Bauteils an dieser Stelle erfolgen, insbesondere kann der Querschnitt des ersten Querträgers in diesem Bereich im wesentlichen konstant gehalten werden, was der Krafteinleitung wiederum zu Gute kommt. Die Längsträger weisen Aufnahmen für Hilfsrahmenlager auf, mit denen der Hilfsrahmen elastisch mit der Fahrzeug-Karosserie verbunden werden kann. Über diese Hilfsrahmenlager wird die Kraft aus dem Verteilergetriebe in die Fahrzeug-Karosserie eingeleitet. Über die genannten Bauteile hinaus weist der Hilfsrahmen, insbesondere die Längsträger, weitere Lagerstellen zur Befestigung von Radführungselementen, wie beispielsweise Quer- und Längslenkern, auf.

In einer bevorzugten Ausführung unterquert der erste Querträger den Teil des Verteilergetriebes mit einem geschwungenen Verlauf im Kreuzungsabschnitt. In einer besonders bevorzugten Ausführung bleibt der Querschnitt des Querträgers im Abschnitt des geschwungenen Verlaufs im wesentlichen gleich und weicht dabei auch von dem Querschnitt im nicht-geschwungenen Verlauf nicht wesentlich ab. Dies erhält die Festigkeit des ersten Querträgers auf einem hohen Niveau. Der geschwungene Verlauf im Kreuzungsabschnitt des ersten Querträgers, der von dem Teil des Verteilergetriebes, insbesondere dessen Eingangswellenflansch, untergequert wird, begünstigt eine gute Bauraumausnutzung.

In einer bevorzugten Ausführung verläuft die Eingangswelle in etwa auf Höhe der Längsträger oder mit anderen Worten ausgedrückt in einer gemeinsamen Ebene. Damit baut die Hilfsrahmenanordnung in Fahrzeughochrichtung sehr kompakt.

In einer bevorzugten Ausführung bilden die beiden Schalenteile zusammen ein, in Fahrzeughochrichtung betrachtet, nach unten offenes Profil aus. Das unten offene Profil eignet sich besonders gut zur Aufnahme eines Drehstabstabilisators oder eines Lenkgetriebes, wodurch insgesamt sehr viel Bauraum eingespart werden kann.

In einer bevorzugten Ausführung weist ein zweiter der Querträger zwei Lageraufnahmen für Lagerelemente des Verteilergetriebes auf. Die Lageraufnahmen sind in Einbaulage des Hilfsrahmens waagrecht ausgerichtet und zur besseren Drehmomentabstützung nennenswert voneinander beabstandet.

In einer bevorzugten Ausführung durchsetzen die beiden Lageraufnahmen den zweiten Querträger jeweils der Breite nach. In die so gebildeten Durchgangsöffnungen können an sich bekannte Gummi-Metall-Hülsenlager eingesetzt werden. Die beiden Lageraufnahmen des zweiten Querträgers und die des ersten Querträgers bilden in Draufsicht zusammen ein Dreieck aus.

In einer bevorzugten Ausführung ist der erste Querträger, in Fahrzeuglängsrichtung betrachtet, vorne am Hilfsrahmen angeordnet. Dies wäre beispielsweise der Fall bei einem Fahrzeug mit Frontmotor und Heck- oder Allradantrieb. Bei Heckmotoren müsste der Hilfsrahmen spiegelverkehrt aufgebaut werden und der erste Querträger, in Fahrzeuglängsrichtung betrachtet, hinten am Hilfsrahmen angeordnet sein.

In einer bevorzugten Ausführung sind die Schalenteile als Blechumformteile ausgebildet, insbesondere können die Laschen jeweils durch Umformung aus den Schalenteilen geformt werden.

In einer bevorzugten Ausführung ist der Hilfsrahmen als Schweißgruppe ausgeführt. Dies bietet den Vorteil, dass durch eine bedarfsgerechte Materialauswahl und -dimensionierung ein gewichtsoptimierter Hilfsrahmen erzeugt werden kann.

Ein Fahrzeug mit einer erfindungsgemäßen Hilfsrahmenanordnung weist die Hilfsrahmenanordnung an seinem Hinterwagen als Teil seiner Hinterachse auf. Der Hilfsrahmen wird an mehreren Stellen elastisch mit dem Fahrzeugrohbau verbunden und weist ferner die radführenden Lenker auf, die andererseits mit jeweils einem der Radträger verbunden sind. Die Antriebsquelle ist im Vorderwagen des Fahrzeugs angeordnet und leitet ihr Drehmoment über die Eingangswelle des Verteilergetriebes zumindest teilweise in das Verteilergetriebe ein, welches das Drehmoment bedarfsgerecht über die Ausgangswellen an die den Radträgern zugeordneten Räder zur Erzeugung einer Raddrehung zuteilt.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:
Fig. 1 eine isometrische Ansicht einer Hilfsrahmenanordnung;
Fig. 2 eine Vorderansicht des Hilfsrahmens;
Fig. 3 einen Schnitt entlang A-A durch den Hilfsrahmen aus Fig. 2.

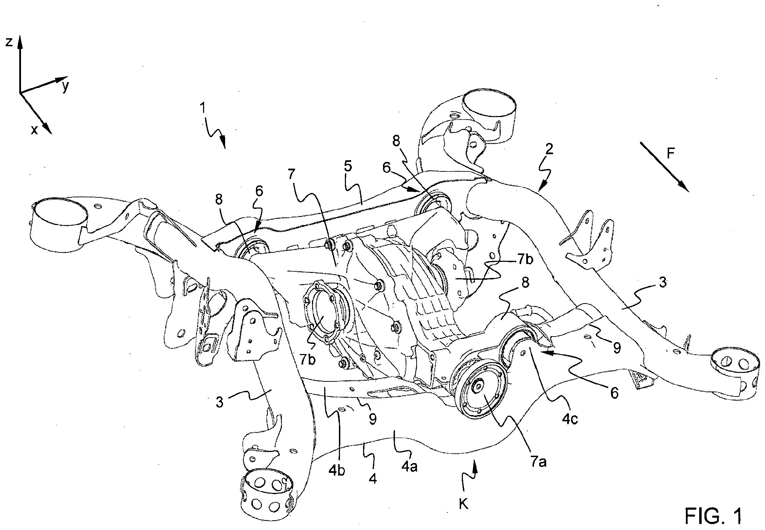

Gemäß der Fig. 1 hat eine Hilfsrahmenanordnung 1 einen Hilfsrahmen 2 mit zwei spiegelsymmetrisch und beabstandet zueinander angeordnete Längsträger 3, die von zwei beabstandet zueinander angeordneten Querträgern 4 und 5 rahmenartig verbunden sind. Ein erster Querträger 4 ist in Fahrtrichtung F vorne und ein zweiter Querträger 5 ist in Fahrtrichtung F hinten am Hilfsrahmen 2 angeordnet. In dem zwischen den Querträgern 4 und 5 und den Längsträgern 3 gebildeten Freiraum kann ein Verteilergetriebe 7, mit einer in Fahrtrichtung F weisenden Eingangswelle 7a und zwei in Fahrzeugquerrichtung y entgegengesetzt weisenden Ausgangswellen 7b, angeordnet werden. Die Eingangswelle 7a verläuft in Fahrzeughochrichtung z betrachtet in etwa auf Höhe der benachbarten Längsträger 3 und überquert den ersten Querträger 4 in einem Kreuzungsabschnitt K. Der erste Querträger 4 unterquert die Eingangswelle 7a mit einem geschwungenen Verlauf. Der erste Querträger 4 ist aus zwei Schalenteilen 4a und 4b zusammengefügt, wobei die Schalenteile 4a und 4b zusammen ein, in Fahrzeughochrichtung z betrachtet, nach unten offenes u-förmiges Profil bilden. Die beiden Schalenteile 4a und 4b überlappen auf der Oberseite des durch sie gebildeten ersten Querträgers 4 bereichsweise und sind dort stoffschlüssig entlang entsprechender Fügenahten 9 verbunden, insbesondere verschweißt. Jedes der beiden Schalenteile 4a und 4b bildet eine Lasche 4c aus, die in Fahrzeughochrichtung z nach oben von dem ersten Querträger 4 abragen. Die beiden Laschen 4c ergeben zusammen eine in Fahrzeuglängsrichtung x waagrecht ausgerichtete Lageraufnahme 6 für ein Lagerelement 8 eines Verteilergetriebes 7. Das Lagerelement 8 ist dabei achsparallel von der Eingangswelle 7a in Richtung eines der Längsträger 3 verschoben, wodurch sich die Position der Lageraufnahme 6 am ersten Querträger 4 fast zwangsläufig ergibt. Der zweite Querträger 5 hat zwei weitere Lageraufnahmen 6, die den zweiten Querträger 5 jeweils der Breite nach durchsetzen und in Fahrzeuglängsrichtung x ausgerichtet sind. Die Lageraufnahmen 6 des zweiten Querträgers 5 können entsprechende Lagerelemente 8 des Verteilergetriebes 7 aufnehmen. Alle Lageraufnahmen 6 ergeben in Draufsicht betrachtet zusammen ein Dreieck. Die Lagerelemente 8 umfassen jeweils an sich bekannte Gummi-Metall-Hülsenlager.

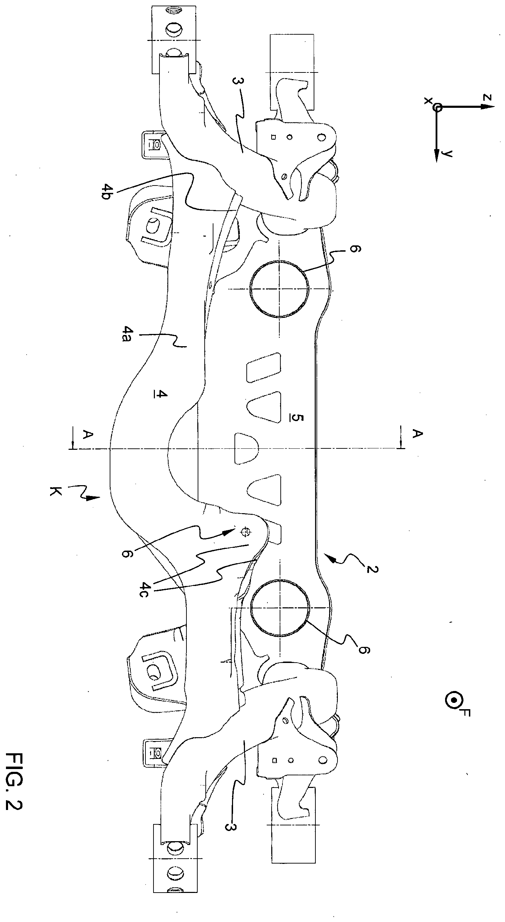

Die Fig. 2 zeigt den Hilfsrahmen 2, bestehend aus den beiden spiegelsymmetrisch voneinander beabstandeten Längsträgern 3, sowie dem in Fahrtrichtung F vorne liegenden ersten Querträger 4 und dem dahinter liegenden zweiten Querträger 5. Der erste Querträger 4 ist aus zwei Schalenteilen 4a und 4b aufgebaut, wobei jedes Schalenteil 4a und 4b eine Lasche 4c ausbildet, die zusammen eine Lageraufnahme 6 formen. Der erste Querträger 4 als solches weist in einem Kreuzungsbereich K einen geschwungenen Verlauf auf, wobei die Lageraufnahme 6 randseitig an dem Kreuzungsbereich K angeordnet ist. Der zweite Querträger 5 hat zwei weitere Lageraufnahmen 6, die jeweils durch in Fahrzeuglängsrichtung x verlaufende Durchgangsbohrungen durch die Breite des zweiten Querträgers 5 gebildet werden.

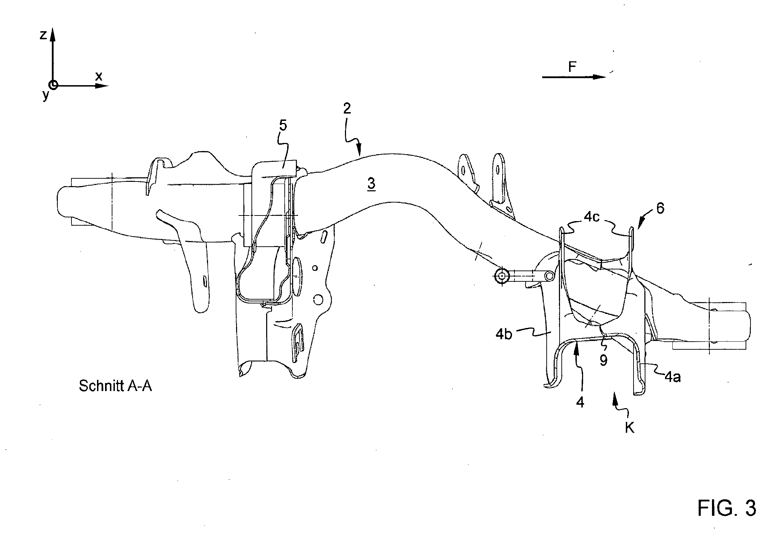

Die Fig. 3 zeigt den Hilfsrahmen 2 aus Fig. 2 als Schnitt entlang A-A. Daran lässt sich besonders gut der Aufbau des ersten Querträgers 4 erkennen. Die beiden Schalenteile 4a und 4b überlappen sich auf der Oberseite des ersten Querträgers 4 geringfügig, wodurch mittels Schweißen dort eine linienförmige Fügenaht 9 gebildet werden kann. Die Fügenaht 9 verläuft in Fahrzeugquerrichtung y betrachtet fluchtend zwischen den Laschen 4c. Die beiden Laschen 4c werden aus dem jeweiligen Schalenteil 4a bzw. 4b durch Umformen erzeugt, weshalb sich im Bereich der Lageraufnahme 6 eine Öffnung auf der Oberseite des ersten Querträgers 4 zwischen den Laschen 4c ausbildet. Der erste Querträger 4 weist ein nach unten offenes u-förmiges Profil auf, das zur zusätzlichen Versteifung wahlweise über kurze Abschnitte auch geschlossen sein kann.

### Liste der Bezugszeichen:

- x: Fahrzeuglängsrichtung
- y: Fahrzeugquerrichtung
- z: Fahrzeughochrichtung

- F: Fahrtrichtung
- K: Kreuzungsabschnitt

- 1: Hilfsrahmenanordnung
- 2: Hilfsrahmen
- 3: Längsträger
- 4: erster Querträger
- 4a: erstes Schalenteil
- 4b: zweites Schalenteil
- 4c: Lasche
- 5: zweiter Querträger
- 6: Lageraufnahme
- 7: Verteilergetriebe
- 7a: Eingangswelle
- 7b: Ausgangswelle
- 8: Lagerelement
- 9: Fügenaht

## Patentansprüche

1. Hilfsrahmenanordnung (1) für ein Fahrzeug, umfassend einen mehrteilig aufgebauten Hilfsrahmen (2) mit zwei voneinander beabstandeten Längsträgern (3), die von zwei voneinander beabstandeten Querträgern (4, 5) rahmenartig verbunden sind, sowie ein von den Längsträgern (3) und Querträgern (4, 5) umrahmt an dem Hilfsrahmen (2) gelagertes Verteilergetriebe (7) mit einer Eingangswelle (7a) und zwei Ausgangswellen (7b), wobei ein erster der Querträger (4) von einem Teil des Verteilergetriebes in einem Kreuzungsabschnitt (K) gequert wird und aus zwei zumindest abschnittsweise miteinander verbundenen Schalenteilen (4a, 4b) aufgebaut ist, **dadurch gekennzeichnet, dass** jedes der beiden Schalenteile (4a, 4b) eine Lasche (4c) ausbildet und die Laschen (4c) zusammen eine Lageraufnahme (6) eines Lagerelements (8) des Verteilergetriebes (7) ausbilden, wobei das Lagerelement (8) achsparallel zur Eingangswelle (7a) in Richtung eines der Längsträger (3) verschoben von dem Verteilergetriebe (7) abragt.

2. Hilfsrahmenanordnung (1) nach Anspruch 1, **dadurch gekennzeichnet, dass** der erste Querträger (4) den Teil des Verteilergetriebes (7) mit einem geschwungenen Verlauf im Kreuzungsabschnitt (K) unterquert.

3. Hilfsrahmenanordnung (1) nach Anspruch 1 oder 2, **dadurch gekennzeichnet, dass** die Eingangswelle (7a) in etwa auf Höhe der Längsträger (3) verläuft.

4. Hilfsrahmenanordnung (1) nach einem der Ansprüche 1 bis 3, **dadurch gekennzeichnet, dass** die beiden Schalenteile (4a, 4b) zusammen ein, in Fahrzeughochrichtung (z) betrachtet, nach unten offenes Profil ausbilden.

5. Hilfsrahmenanordnung (1) nach einem der Ansprüche 1 bis 4, **dadurch gekennzeichnet, dass** ein zweiter der Querträger (5) zwei Lageraufnahmen (6) für Lagerelemente (8) des Verteilergetriebes (7) aufweist.

6. Hilfsrahmenanordnung (1) nach Anspruch 5, **dadurch gekennzeichnet, dass** die beiden Lageraufnahmen (6) den zweiten Querträger (5) jeweils der Breite nach durchsetzen.

7. Hilfsrahmenanordnung (1) nach einem der Ansprüche 1 bis 6, **dadurch gekennzeichnet, dass** der erste Querträger (4), in Fahrzeuglängsrichtung (x) betrachtet, vorne am Hilfsrahmen (2) angeordnet ist.

8. Hilfsrahmenanordnung (1) nach einem der Ansprüche 1 bis 7, **dadurch gekennzeichnet, dass** die Schalenteile (4a, 4b) als Blechumformteile ausgebildet sind.

9. Hilfsrahmenanordnung (1) nach einem der Ansprüche 1 bis 8, **dadurch gekennzeichnet, dass** der Hilfsrahmen (2) als Schweißgruppe ausgeführt ist.

10. Fahrzeug mit einer Hilfsrahmenanordnung (1) nach Anspruch 1.

## Claims

1. Subframe arrangement (1) for a vehicle, comprising a subframe (2) structured in multiple parts with two longitudinal beams (3) spaced apart from one another, which are connected in the manner of a frame by two transverse beams (4, 5) spaced apart from one another as well as a distribution gear (7) mounted on the subframe (2) framed by the longitudinal beams (3) and transverse beams (4, 5) with an input shaft (7a) and two output shafts (7b), wherein a first of the transverse beams (4) is crossed by a part of the distribution gear in an intersection (K) and is structured from two shell parts (4a, 4b) connected to one another at least in sections, **characterised in that** each of the two shell parts (4a, 4b) forms a tab (4c) and the tabs (4c) together form a bearing housing (6) of a bearing element (8) of the distribution gear (7), wherein the bearing element (8) protrudes axially-parallel to the input shaft (7a) in the direction of one of the longitudinal beams (3), pushed by the distribution gear (7).

2. Subframe arrangement (1) according to claim 1, **characterised in that** the first transverse beam (4) crosses under the part of the distribution gear (7) with a curved course in the intersection (K).

3. Subframe arrangement (1) according to claim 1 or 2, **characterised in that** the input shaft (7a) runs roughly at the height of the longitudinal beams (3).

4. Subframe arrangement (1) according to any one of claims 1 to 3, **characterised in that** the two shell parts (4a, 4b) together form a profile that is open downwards when viewed in the vehicle vertical direction (z).

5. Subframe arrangement (1) according to any one of claims 1 to 4, **characterised in that** a second of the transverse beams (5) has two bearing housings (6) for the bearing elements (8) of the distribution gear (7).

6. Subframe arrangement (1) according to claim 5, **characterised in that** the two bearing housings (6) pass through the two transverse beams (5) widthways.

7. Subframe arrangement (1) according to any one of claims 1 to 6, **characterised in that** the first transverse beam (4) is arranged at the front of the subframe (2) when viewed in the vehicle longitudinal direction (x).

8. Subframe arrangement (1) according to any one of claims 1 to 7, **characterised in that** the shell parts (4a, 4b) are designed as sheet metal formed parts.

9. Subframe arrangement (1) according to any one of claims 1 to 8, **characterised in that** the subframe (2) is configured as a weld group.

10. Vehicle with a subframe arrangement (1) according to claim 1.

## Revendications

1. Agencement de faux-châssis (1) pour un véhicule, comprenant un faux-châssis (2) construit en plusieurs parties avec deux poutres longitudinales (3) distantes l'une de l'autre, qui sont reliées à la manière d'un châssis par deux poutres transversales (4, 5) distantes l'une de l'autre, ainsi qu'une boîte de transfert (7) montée sur le faux-châssis (2), encadrée par les poutres longitudinales (3) et par les poutres transversales (4, 5) et munie d'un arbre d'entrée (7a) et de deux arbres de sortie (7b),
dans lequel une première poutre transversale (4) est croisée par une partie de la boîte de transfert dans un tronçon de croisement (K) et est construite à partir de deux parties de coque (4a, 4b) reliées l'une à l'autre au moins par endroits,
**caractérisé en ce que** chacune des deux parties de coque (4a, 4b) forme une éclisse (4c) et les éclisses (4c) forment conjointement un support de palier (6) d'un élément formant palier (8) de la boîte de transfert (7),
dans lequel l'élément formant palier (8) dépasse de la boîte de transfert (7), décalé parallèlement à l'axe par rapport à l'arbre d'entrée (7a) en direction de l'une des poutres longitudinales (3).

2. Agencement de faux-châssis (1) selon la revendication 1, **caractérisé en ce que** la première poutre transversale (4) croise par-dessous la partie de la boîte de transfert (7) avec une allure incurvée dans le tronçon de croisement (K).

3. Agencement de faux-châssis (1) selon la revendication 1 ou 2, **caractérisé en ce que** l'arbre d'entrée (7a) s'étend sensiblement à la hauteur de la poutre longitudinale (3).

4. Agencement de faux-châssis (1) selon l'une quelconque des revendications 1 à 3, **caractérisé en ce que** les deux parties de coque (4a, 4b) forment conjointement un profil ouvert vers le bas, vu dans la direction verticale (z) du véhicule.

5. Agencement de faux-châssis (1) selon l'une quelconque des revendications 1 à 4, **caractérisé en ce qu'**une deuxième poutre transversale (5) comporte deux supports de palier (6) pour des éléments formant palier (8) de la boîte de transfert (7).

6. Agencement de faux-châssis (1) selon la revendication 5, **caractérisé en ce que** les deux supports de palier (6) traversent, à chaque fois en largeur, la deuxième poutre transversale (5).

7. Agencement de faux-châssis (1) selon l'une quelconque des revendications 1 à 6, **caractérisé en ce que** la première poutre transversale (4) est agencée à l'avant, vu dans la direction longitudinale (x) du véhicule, sur le faux-châssis (2).

8. Agencement de faux-châssis (1) selon l'une quelconque des revendications 1 à 7, **caractérisé en ce que** les parties de coque (4a, 4b) sont réalisées comme des pièces formées en tôle.

9. Agencement de faux-châssis (1) selon l'une quelconque des revendications 1 à 8, **caractérisé en ce que** le faux-châssis (2) est réalisé comme un groupe soudé.

10. Véhicule avec un agencement de faux-châssis (1) selon la revendication 1.
